Europäisches Patentamt

(19) European Patent Office

Office européen des brevets

(11) Publication number : **0 235 601 B1**

(12) # EUROPEAN PATENT SPECIFICATION

(45) Date of publication of patent specification :
07.08.91 Bulletin 91/32

(51) Int. Cl.⁵ : **A21D 6/00**

(21) Application number : **87101469.2**

(22) Date of filing : **04.02.87**

(54) **Taste adjusting composition, method for making and using it.**

(30) Priority : **05.02.86 DK 567/86**
**27.01.87 DK 434/87**

(43) Date of publication of application :
**09.09.87 Bulletin 87/37**

(45) Publication of the grant of the patent :
**07.08.91 Bulletin 91/32**

(84) Designated Contracting States :
**AT BE CH DE ES FR GB GR IT LI LU NL SE**

(56) References cited :
**EP-A- 0 124 996**
**EP-A- 0 152 943**
**DE-A- 2 352 306**
**DE-B- 2 851 053**
**FI-B- 40 791**
**US-A- 2 725 300**
**US-A- 3 615 697**
**US-A- 3 950 543**
**US-A- 4 431 674**

(73) Proprietor : **NEXUS A/S**
**Palsgaard**
**DK-7130 Juelsminde (DK)**

(72) Inventor : **Schou, Herbert**
**deceased (DK)**
Inventor : **Dreyer, Jack Alan**
**Hojvangen 30**
**DK-8700 Horsens (DK)**
Inventor : **Zeeberg, John**
**Skraenten 5, Hosby**
**DK-7130 Juelsminde (DK)**
Inventor : **Birkebaek, Susanne**
**Klejsmollevej 9, Klejs**
**DK-7130 Juelsminde (DK)**

(74) Representative : **Patentanwälte Grünecker,**
**Kinkeldey, Stockmair & Partner**
**Maximilianstrasse 58**
**W-8000 München 22 (DE)**

## Description

In the preparation of rye bread, it is known to add, during the dough preparation, a small amount of a taste-adjusting composition which confers a characteristic rye taste to the bread.

It has now been found that an effective taste-adjusting composition conferring rye character to rye bread or rye bread-based products (such as, e.g. powders for making the Danish dish "øllebrød " (a dish made of rye bread and beer)) or bread types based on rye meal combined with other meals or flours, may be prepared, in a simple and very economic manner by heating and extrusion of a product comprising a malted cereal. The bread types mentioned may be as well loaf types as crisp bread and biscuit types.

When the product comprising the malted cereal is heated and extruded under conditions conferring a roasted character, it is converted into an easily disintegratable product which has a characteristic strong rye character taste, and which, when admixed with doughs for preparing rye bread or bread based on rye meal combined with other cereal meals or flours, confers a distinct and desirable rye character taste to the resulting bread. However, it is also possible to perform the extrusion under conditions which confer a smaller degree of roasting, so that the resulting product will be suitable for conferring rye or malted taste to white type bread which is normally based on rye meal in combination with other meals or flours, but which may also, according to an aspect of the invention, be based primarily or exclusively on other meals or flours than rye meal, such as wheat flour, where the product will confer an interesting taste character.

Thus, in one of its aspects, the invention relates to a method for preparing a taste-adjusting composition for rye bread or rye bread-based products or other bread types, especially bread types based on rye meal combined with other cereal meals or flours, comprising subjecting a product which comprises a malted cereal having a water content of at the most 12% by weight to extrusion at a temperature of 180-240°C and optionally disintegrating the extruded product.

The extrusion (and the concomitant heating) is suitably performed in an extruder provided with temperature-regulating means. At the lower extrusion temperatures in the range of 180-240°C, the resulting product will normally be a rather light product, thus with a less pronounced or very small degree of roasting, suitable for incorporation in light rye meal-containing bread types where the rye meal is combined with relatively large amounts of other cereal meals or flours, whereas, at the higher temperatures in the range, the product will undergo a higher degree of "roasting" so that it will have a darker colour and will thereby be able to contribute to the colouring of the rye bread. A preferred temperature range is 180-230°C, in particular 190-220°C, but also the range of 180-210°C is of interest.

The product obtained from the extruder consists of granules of a relatively crisp character. The granules may, in principle, be added as such to the dough and become disintegrated during the mixing of the dough (which is within the scope of the invention), but it is generally preferred to comminute the granules in a mill such as a hammer mill or a disc mill.

The water content of the malted cereal used as a starting material is of decisive importance to the properties of the resulting product. Thus, at a water content of the malted cereal of above about 12% by weight, the resulting product will not really confer any interesting rye character or roasted character to the resulting bread. When the water content of the malted cereal is at the most 8% by weight, in particular at the most 6% by weight, the product will be suited for taste adjustment of medium dark or dark rye bread types, whereas the compositions made from malted cereal having a water content in the range of 8-12% by weight are especially suitable for use in white bread types, such as bread types incorporating rye meal or rye meal combined with other cereal meals or flours.

DE-B-2 851 053 relates to a method for preparing a malt-based taste-improving additive for various forms of bread. The method comprises drying the malt in a warm air current at at the most 60°C, thereby reducing the water contents to between 15 and 26% by weight, thereafter comminuting the malt and extruding at an extrusion pressure between 50 and 150 barr and a temperature of 140-180°C. It is specifically stated that the additive, i.e. the extruded product, must not have a roasted character, and that the water content of the malt subjected to extrusion should be 15-26% by weight. Thus, the present invention is clearly distinct from the disclosure of DE-B-2 851 053, both with respect to the water content of the material subjected to extrusion and the properties of the resulting extruded product.

The malted cereal may be selected from malted barley, malted wheat, and malted rye and is preferably malted barley. The malted cereal as such can be supplied directly to the screw section of the extruder where it becomes crushed, alternatively, it may be ground, such as in a hammer mill before it is added to the extruder. Whether the malted cereal is supplied to the extruder as such or in ground state is not critical.

The malted cereal may be essentially the only component of the product subjected to heating and extrusion, or it may be combined with other ingredients, often minor amounts of other ingredients, to obtain interesting and attractive taste characters.

2

Examples of other ingredients which may be combined with the malted cereal and subjected to the extrusion together with the malted cereal are a cereal flour or meal, a saccharide, a spice, an acid, or an alcohol.

In particular, the malted cereal may be combined with a suitable edible acid, such as lactic acid, acetic acid, citric acid, malic acid, fumaric acid, tartaric acid, propionic acid, phosphoric acid, or hydrochlorid acid.

When an acid such as lactic acid is combined with the malted cereal such as malted barley, the weight ratio between the acid and the malted cereal is normally in the range of 0.1 :100-5 :100, in particular in the range of 1 :100-4 :100, such as 2 :100-4 :100.

In order to obtain a differentiated interesting taste character of the bread, the product subjected to extrusion may contain a spice such as caraway, aniseed, or fennel, or a herb, or an extract of a spice or a herb. It is normally preferred that the amount of the spice is at the most 20% by weight, preferably at the most 10% by weight, calculated on the product subjected to extrusion. The spice can be used as such but may also be in the form of an extract.

Another interesting modification of the taste may be obtained when the product subjected to extrusion contains ethanol which optionally may contain a spice extract such as indicated above. Normally, the amount of ethanol is at the most 8% by weight, in particular at the most 5% by weight, calculated on the product subjected to extrusion.

The product subjected to extrusion may also contain a sugar such as glucose, fructose, or saccharose, preferably in an amount of at the most 20% by weight, preferably at the most 10% by weight, calculated on the product subjected to extrusion.

It is possible to combine the malted cereal with a cereal meal or flour prior to the extrusion. The other cereal may be rye, but it is also possible to use e.g. wheat flour, especially when the extruded product is to be used for white or light bread types. Thus, the product subjected to extrusion may contain wheat flour in an amount of at the most 30% by weight, such as at the most 20% by weight, e.g. at the most 10% by weight, calculated on the product subjected to extrusion.

An especially interesting and presently preferred taste of rye bread is obtained when the product subjected to extrusion comprises malted barley in admixture with caraway and an edible acid which is preferably lactic acid or acetic acid, in particular when the product subjected to extrusion comprises malted barley combined with about 2-8% by weight of caraway and about 1.5-4% by weight of lactic acid or acetic acid, preferably about 3-6% by weight of caraway and about 2-3% by weight of lactic acid, calculated on the product subjected to extrusion.

In the present application and claims, the term "roasted", as used about the extruded product, indicates that the product is darker than the starting mixtures. One method for determining the degree of roasting is to determine the reflectance parameters $L^*a^*b^*$ as described in detail in Example 6. When the extruded product is to be used for medium dark or dark rye bread types, it is normally preferred that the $L^*$ value is at the most 60, measured as described in Example 6.

The invention also relates to a method for manufacturing rye bread or rye bread-based products or other bread types, in particular bread types based on rye meal combined with other cereal meals or flours, comprising including, in the mixture from which the bread dough is made, 0.5-6% by weight, in particular 1-4% by weight, of a finely divided composition comprising an extruded malted cereal, in particular an extruded malted cereal which has a roasted character.

The composition used in this method is preferably a composition prepared as described above. It is, however, within the scope of the invention to use a composition where the malted cereal and optionally some of the added ingredients, where present, have been extruded, normally together with a malted cereal, but where other ingredients, e.g. spices or herbs, have been added to the extruded product and thus have not themselves been subjected to the extrusion.

The invention also relates to a taste-adjusting composition for rye bread or rye bread-based products or other bread types, in particular bread types based on rye meal combined with other cereal meals or flours, comprising extruded malted cereal having a roasted character. As explained above, the malted cereal may be malted barley, malted rye, or malted wheat, of which malted barley is presently preferred. Analogously to what has been stated in connection with the manufacturing of rye bread or rye bread based products or other bread types, in particular bread types based on rye meal, the composition may comprise other constituents combined with the extruded malted cereal, such as a cereal flour or meal, saccharide, spice, an acid or an alcohol, these constituents corresponding qualitatively and quantitatively to what has been explained above. Also in connection with the composition it should be noted that these other ingredients or some of them may have been extruded together with the malted cereal or they may have been added to the extruded products and thus have not themselves undergone the extrusion. At present, it is preferred that the other constituents have been extruded together with the malted cereal.

The composition of the invention is preferably included in bread mixes in a similar manner as other powdery constituents, such as powdery "precooked starch ", which are customarily incorporated in the dough mixes. The composition is normally incorporated in an amount of 0.5-6% by weight, in particular 1-4% by weight, such as 2-3% by weight, calculated on the total dry bread mix constituents. The handling of the dough and the baking of the bread are performed in the normal manner. Similar considerations apply when the composition is used in the other products mentioned.

Thus, when the composition is used in rye bread based products, such as powders for making "ølle-brød ", it is incorporated in an amount of 1-3% by weight of the total powder. A typical "øllebrød"-powder is composed of 68% dry, comminuted rye bread, which optionally contains the product of the invention, 14% granulated sugar and 18% dried malt beer.

If desired, the incorporation of the composition of the invention in bread mixes may be combined with incorporation of a bread-improving composition as described in European patent application publication No. 0152 943, that is, a composition prepared by heating and extrusion of a mixture of a cereal flour or meal or starch on the one hand and a vegetable fibrous material on the other hand.

The invention is further illustrated in the following examples :

## EXAMPLE 1

To an extruder of the type BC 45 supplied by Creusot-Loire, France, and comprising a double screw rotating at a rotational speed of 180 r.p.m. and two nozzles of a diameter of 4 mm, part of the double screw length being cooled by means of a water jacket and the part of the double screw being adjacent to the nozzles being heated by means of an induction heating jacket, a mixture of 2.2% of 86% lactic acid and 97.8% of ground malted barley (the malted barley used in this and all the following examples was Munich malted barley with a water content of 4.4% by weight, as determined according to "Standardmethode für Getreide, Mehl und Brot", Moritz Schäfer, Detmold 1978, ICC Standard 110 (this method comprises heating the malted barley at 135°C for a couple of hours, cooling, and determining the weight loss)) was supplied in an amount of about 28 kg/hour, the malted barley being supplied through an inlet funnel comprising two screws conveying the malted barley, and the lactic acid being supplied to the double screw through a tube.

The temperature in the screw section of the extruder was kept at 210°C.

The resulting crisp, curly, dark brown granules were comminuted to a fine powdery product in a hammer mill.

The powdery product had a strong typical rye bread taste.

A comparison product prepared in the same manner from 2.2% of 86% lactic acid and 97.8% of rye meal did not have the characteristic rye bread taste.

## EXAMPLE 2

In the same manner as described in Example 1, a composition was made by extrusion and heating of a mixture of 2.9% of 86% lactic acid and 97.1% of malted barley. The resulting product was comminuted in a hammer mill.

The product had a very strong characteristic rye bread taste.

A comparison product made from 2.9% of 86% lactic acid and 97.1% of rye meal did not have the characteristic rye bread taste.

## EXAMPLE 3

In the same manner as described in Example 1, a bread admixture composition was made from 2.0% by weight of 86% lactic acid and 98% by weight of malted barley. The temperature in the screw section of the extruder was kept at 220°C.

The extruded curly dark brown granules were comminuted to a powdery product in a hammer mill. The product had a strong characteristic rye bread taste.

Rye bread was prepared in the following manner :

41 % by weight of rye meal was admixed with

10% by weight of rye grains,

41 % by weight of wheat flour,

0.3% of dough acidifying agent (a mixture of 4.5 parts by weight of citric acid, 4.5 parts by weight of malic acid, and 1 part by weight of calcium acetate),

2% by weight of salt,

1.7% by weight of fully hardened vegetable fat,

1% by weight of a finely divided composition prepared by heating and extrusion of a mixture of 40% by weight of rye meal and 60% by weight of wheat bran as described in Example 1 of European published patent application No. 0 152 943, and 3% by weight of the powdery product prepared as described above.

1000 g of the resulting mixture was admixed with 20 g of yeast and 500 g of water. The dough was allowed to rise for one hour, whereupon it was put into a baking tin and allowed to rise for an additional 30 minutes and was then baked for 1 hour in an oven which had been preheated to 230°C, and in which the temperature gradually decreased to 180°C during the baking time.

The resulting bread had a pleasant typical brown rye bread colour and a characteristic rye bread taste, was of good sliceability and had good volume properties.

## EXAMPLE 4

In the same manner as described in Example 1, a bread admixture composition was made from 2.0% by weight of 86% lactic acid and 98% by weight of malted barley. The temperature in the screw section of the extruder was kept at 180°C.

The extruded curly light brown granules were comminuted to a powdery product in a hammer mill. The product had a strong characteristic rye bread taste.

Bread was prepared in the following manner :
20% by weight of rye meal was admixed with
72% by weight of wheat flour,
0.2% of dough acidifying agent (a mixture of 4.5 parts by weight of citric acid, 4.5 parts by weight of malic acid, and 1 part by weight of calcium acetate),
2% by weight of salt,
2.5% by weight of fully hardened vegetable fat,
0.7% by weight of a finely divided composition prepared by heating and extrusion of a mixture of 40% by weight of rye meal and 60% by weight of wheat bran as described in Example 1 of European published patent application No. 0 152 943,
1.0% of sugar, and
1.6% by weight of the powdery product prepared as described above.

The resulting mixture was admixed with yeast and water, allowed to rise and baked in exactly the same manner as described in Example 3.

The resulting bread had a pleasant and characteristic taste with the typical rye contribution, and was furthermore of good sliceability and had good volume properties.

## EXAMPLE 5

In a larger scale extruder of the same type as the extruder described in Example 1, a bread and mixture composition was made by extruding malt barley. The temperature in the screw section of the extruder was kept at 205-210°C, a small amount of water being added to the double screw through a tube when necessary to contribute to keep the temperature in the range stated.

The extruded curly, dark brown granules were comminuted to a powdery product. The product had a strong rye bread taste.

Rye bread was prepared in the following manner :
35% by weight of rye meal was mixed with,
12% by weight of rye grains,
43% by weight of wheat flour,
0.3% by weight of dough acidifying agent (a mixture of 4.5 parts by weight of citric acid, 4.5 parts by weight of malic acid, and 1 part by weight of calcium acetate),
2% by weight of salt,
1.7% by weight of fully hardened vegetable fat,
1% by weight of a finely divided composition prepared by heating and extrusion of a mixture of 40% by weight of rye meal and 60% by weight of wheat bran as described in Example 1 of European published patent application No. 0 152 943, and
3% by weight of the powdery product prepared as described above.

The resulting mixture was admixed with yeast and water, allowed to rise and baked in exactly the same manner as described in Example 3.

The resulting bread had a pleasant and characteristic taste with a typical rye contribution, was of good sliceability and had good volume properties.

## EXAMPLE 6

In the same manner as described in Example 1, a series of compositions were made from malted barley (not ground) and various taste-improving additives. The additives were supplied to the malted barley in the amounts stated in Table I below to give a total of 100% by weight.

The temperature of the screw section of the extruder was kept at 210°C.

The resulting product was comminuted in a hammer mill.

On the product, the reflectance parameters according to the L*a*b* method (CIE (Commission Internationale de l'Eclairage) 1976) were measured on a Minolta Chromameter II Reflectance. The parameters characterize the colour of the product.

The L*-value designates the light component, the a*-value (ranging from -60 to +60) designates the green/red component, and the b*-value (ranging from -60 to +60) designates the blue/yellow component of the colour.

## TABLE I

**Influence of various additives to the malted barley on the colour of the extruded product**

| Additive | Amount in % | Reflectance parameters of the extruded product | | |
| --- | --- | --- | --- | --- |
| | | L* | a* | b* |
| Wheat flour | 10 | 59.82 | +2.07 | +20.94 |
| | 20 | 62.16 | +1.82 | +21.75 |
| | 30 | 63.62 | +1.61 | +22.29 |
| Caraway | 2 | 54.72 | +2.57 | +17.85 |
| Acetic acid | 2.5 | 54.12 | +3.02 | +18.55 |
| Caraway | 5 | | | |
| and lactic acid | 2.5 | 56.87 | +2.57 | +19.30 |
| Ethanol | 3.8 | 57.47 | +2.09 | +19.49 |
| Honey | 5 | 54.54 | +2.76 | +18.28 |
| Syrup | 10.1 | 58.18 | +2.83 | +21.40 |
| | 26.4 | 68.11 | +0.84 | +26.50 |

The caraway was comminuted and employed as a powdery product.

The syrup was cane sugar of the type "No. 3 TREACLE" from Tate and Lyle Refineries with a dry matter content of 83-84%.

The additives were added to the malted barley in the concentrations stated to give a total of 100%.

As can be seen from Table 1, the L*-values of the resulting products, except the one with the very high syrup content (26.4%) and the ones with a wheat flour content of 20% and 30%, are within the preferred range for use in rye bread preparations. The compositions with the syrup content of 26.4% and the high wheat flour contents are suitable for white bread types.

## EXAMPLE 7

The influence of the extrusion temperature on the colour and other properties of the final product were investigated. Three bread admixture compositions were prepared from malted barley (not ground) in the same manner as described in Example 1.

The temperatures of the screw section of the extruder were 190°C, 210°C, and 230° C, respectively.

The resulting product was comminuted in a hammer mill.

The reflectance parameters of the resulting product are stated in Table II below.

## TABLE II

### Influence of extrusion temperature on the properties of the extruded product

| Temperature | Reflectance parameters of the extruded product | | |
| | L* | a* | b* |
| --- | --- | --- | --- |
| 190°C | 65.97 | +1.60 | +24.27 |
| 210°C | 53.46 | +2.66 | +17.73 |
| 230°C | 53.25 | +2.80 | +17.29 |

As can be seen from the L*-values of the resulting products, an extrusion temperature of 190°C is too low to give a sufficiently dark colour for rye bread preparation. The product is, however, well suited for white bread types. The products prepared by extrusion at 210° and 230°C have colour properties which are well suited for rye bread, although the taste of the high temperature extrusion product is slightly burned.

## EXAMPLE 8

The influence of the water contents in the materials fed to the extruder on the colour of the extruded product was investigated. Water was mixed with the malted barley (not ground) to give the total concentrations of water stated in Table III. The product was made in the same manner as described in Example 1.

The temperature of the screw section of the extruder was kept at 210°C, except in Experiment 5b where the temperature was 235°C.

The extruded product was comminuted in a hammer mill.

## TABLE III

Influence of water contents in starting materials on the properties of the extruded product

| Experiment No. | | 1 | 2 | 3 | 4 | 5a | 5b |
|---|---|---|---|---|---|---|---|
| Water contents in starting materials | | 4.4% | 6% | 8% | 10% | 12%[+) | 12%[++) |
| Co-ordinates | $L^*$ | 55.8 | 58.08 | 61.76 | 65.98 | 71.12 | 70.79 |
| according to | $a^*$ | +1.90 | +1.87 | +1.81 | +1.48 | +0.03 | +0.44 |
| $L^*a^*b^*$ | $b^*$ | +16.92 | +18.76 | +20.78 | +23.63 | +24.56 | +24.33 |
| Acidity | pH | 4.7 | 4.7 | 4.8 | 5.0 | 5.1 | 5.6 |
| Water contents in product | $\%H_2O$ | 3.0 | 2.8 | 3.2 | 3.5 | 4.8 | 4.5 |

+) at 210°C      ++) at 235°C

The water contents in the malted cereal was 4.4%. Water was supplied up to the total concentrations stated in the table

As can be seen from the $L^*$-values stated in Table III, it is preferred to secure that the total content of water in the starting materials is at the most 6%, when the product is to be used in the preparation of rye bread. A water content of up to 12% is, however, acceptable when the product is used in the preparation of white bread types.

It can also be seen that the extrusion temperature does not have any significant influence on the colour of the product made from the starting materials with a water content of 12%. Thus, the water content of the starting materials is an essential feature for the field of application of the final product.

## EXAMPLE 9

The bread admixture compositions made as described in Example 6 were used in the preparation of rye bread.

The bread was made from the following ingredients :

1000 g wheat flour
970 g rye meal
40 g yeast
40 g salt
7 g dough acidifying agent (the composition stated in Example 4)
1280 g water
30 g bread admixture composition according to Example 6

The ingredients were mixed in an appropriate manner, and the resulting mixture was kneaded for 5 minutes at the lowest speed in a Kemprer SP 15 kneading machine. The dough was subjected to bulk fermentation for 40 minutes followed by a proving time of 30 minutes at a temperature of 35°C in an atmosphere of 80% relative humidity. The bread was baked for 50 minutes in an oven which had been preheated to 250°C and in which the temperature gradually decreased to 180°C during the baking time.

The reflectance parameters of the resulting bread are stated in Table IV below.

EP 0 235 601 B1

**TABLE IV**

**Influence of the various additives to the malted barley on the properties of bread made with 3% of the extruded product according to Example 6**

| Additive | Amount in % | L* | a* | b* | Comments |
|---|---|---|---|---|---|
| | | Reflectance parameters of the extruded product | | | |
| Wheat flour | 10 | 49.88 | +2.31 | +21.16 | |
| | 20 | 51.70 | +1.93 | +21.78 | ** |
| | 30 | 54.05 | +1.01 | +22.02 | ** |
| Caraway | 2 | 50.02 | +2.13 | +21.48 | |
| Acetic acid | 2.5 | 50.51 | +2.05 | +20.99 | |
| Caraway and | 5 | | | | |
| lactic acid | 2.5 | 51.53 | +1.78 | +21.08 | |
| Ethanol | 3.8 | 49.13 | +2.21 | +20.38 | |
| Honey | 5 | 51.16 | +2.08 | +21.34 | |
| Syrup | 10.1 | 52.73 | +1.22 | +21.44 | |
| | 26.4 | 55.42 | +1.02 | +23.22 | ** |

All of the employed compositions conferred a pleasant taste to the bread and the bread was of good sliceability and had fine volume properties. The compositions marked with a "**" did, however, not confer an adequate dark colour to the rye bread, but they are well suited in the preparation of white bread types. The composition with caraway and lactic acid conferred an especially pleasant and characteristic taste to the bread.

## EXAMPLE 10

Rye bread was prepared from the same ingredients and in the same manner as described in Example 9 except for the admixture composition employed. The admixture compositions were the ones prepared as described in Example 7. The reflectance parameters for the resulting bread are stated in Table V below

9

## TABLE V

### Influence of extrusion temperature on the properties of bread made with 3% of the extruded product according to Example 7

| Temperature | Reflectance parameters of the extruded product | | |
| | $L^*$ | $a^*$ | $b^*$ |
| --- | --- | --- | --- |
| 190°C | 54.18 | +0.96 | +21.93 |
| 210°C | 48.97 | +2.22 | +20.20 |
| 230°C | 47.50 | +2.61 | +19.95 |

The bread made from the admixture composition extruded at a temperature of 210°C was the only one suited for rye bread with respect to taste and colour properties. The use of the product extruded at a temperature of 190°C resulted in a bread with a lighter colour than what is acceptable for rye bread but with an excellent taste, whereas the use of the product extruded at a temperature of 230°C resulted in a bread with an excellent colour but with a slightly burned taste. The bread was of good sliceability and had fine volume properties.

## EXAMPLE 11

Rye bread was prepared from the same ingredients and in the same manner as described in Example 9 except for the admixture composition employed. The admixture compositions were the ones prepared as described in Example 8. The reflectance parameters for the resulting bread are stated in Table VI below.

## TABLE VI

### Influence of water contents in starting materials on the properties of bread made with 3% of the extruded product according to Example 8

| Experiment No. | | 1 | 2 | 3 | 4 | 5a | 5b |
| --- | --- | --- | --- | --- | --- | --- | --- |
| Water contents in starting materials | | 4.4% | 6% | 8% | 10% | 12%[+] | 12%[++] |
| Co-ordinates | $L^*$ | 49.57 | 49.13 | 52.03 | 52.65 | 56.66 | 57.19 |
| according to | $a^*$ | +2.04 | +2.40 | +1.84 | +1.59 | +0.33 | +0.10 |
| $L^*a^*b^*$ | $b^*$ | +20.46 | +20.81 | +21.08 | +22.40 | +21.97 | +21.47 |

+) at 210°C          ++) at 235°C

The tastes of the different bread types were all very pleasant irrespective of the water content of the starting materials, although the composition with a starting material water content of 12% did not confer any roasted taste to the resulting bread. With respect to the colour of the resulting bread, only the admixture compositions with a starting material water content of less than 6% conferred a sufficient dark colour to be suitable for rye bread. The remaining compositions will, however, be well suited for the preparation of white bread types. The bread was of good sliceability and had fine volume properties.

## Claims

1. A method for preparing a taste-adjusting composition for rye bread or rye bread-based products or bread types based on rye meal combined with other cereal meals or flours or bread types based on other meals or flours than rye meal, such as wheat flour, comprising subjecting a product which comprises a malted cereal having a water content of at the most 12% by weight to extrusion at a temperature of 180-240°C and optionally disintegrating the extruded product.

2. A method according claim 1 wherein the extrusion temperature is 180-230°C, preferably 190-220°C.

3. A method according to claim 1 or 2 wherein the water content of the malted cereal is at the most 8% by weight, preferably at the most 6% by weight.

4. A method according to any of claims 1-3 wherein the malted cereal is selected from malted barley, malted wheat, and malted rye, and preferably is malted barley.

5. A method according to any of claims 1-4 wherein the product subjected to extrusion comprises other constituents combined with the malted cereal, such as a cereal flour or meal, a saccharide, a spice, an acid, or an alcohol.

6. A method according to claim 5 wherein the product subjected to extrusion comprises the malted cereal in admixture with an edible acid which is preferably selected from lactic acid, acetic acid, citric acid, malic acid, fumaric acid, tartaric acid, propionic acid, phosphoric acid, and hydrochloric acid, the weight ratio between the acid and the malted cereal preferably being in the range of 0.1 :100-5 :100, in particular in the range of 1 :100-4 :100, such as 2 :100-4 :100.

7. A method according to claim 5 or 6 wherein the product subjected to extrusion contains a spice such as caraway, aniseed, or fennel, or a herb, or an extract of a spice or a herb, the amount of the spice preferably being at the most 20% by weight, preferably at the most 10% by weight, calculated on the product subjected to extrusion.

8. A method according to any of claims 5-7 wherein the product subjected to extrusion contains ethanol, preferably in an amount of at the most 8% by weight, in particular at the most 5% by weight, calculated on the product subjected to extrusion.

9. A method according to any of claims 5-8 wherein the product subjected to extrusion contains a sugar such as glucose, fructose, or saccharose, preferably in an amount of at the most 20% by weight, preferably at the most 10% by weight, calculated on the product subjected to extrusion.

10. A method according to any of claims 5-9 wherein the product subjected to extrusion contains wheat flour in an amount of at the most 30% by weight, such as at the most 20% by weight, e.g. at the most 10% by weight, calculated on the product subjected to extrusion.

11. A method according to claim 5 wherein the product subjected to extrusion comprises malted cereal in admixture with caraway and an edible acid which is preferably lactic acid or acetic acid, in particular malted barley combined with about 2-8% by weight of caraway and about 1.5-4% by weight of lactic acid or acetic acid, preferably about 3-6% by weight of caraway and about 2-3% by weight of lactic acid, calculated on the product subjected to extrusion.

12. A method for manufacturing rye bread or rye bread-based products or bread types based on rye meal combined with other cereal meals or flours or bread types based on other meals or flours than rye meal, such as wheat flour, comprising including, in the mixture from which the bread dough is made, 0.5-6% by weight, in particular 1-4% by weight, of a finely divided composition obtainable by the process defined in claim 1.

13. A method according to claim 12 wherein the extruded malted cereal has a roasted character.

14. A method according to claim 12 or 13 wherein the malted cereal is selected from malted barley, malted wheat, and malted rye, and preferably is malted barley.

15. A method according to any of claims 12-14 wherein the composition comprises other constituents combined with the extruded malted cereal, such as a cereal flour or meal, a saccharide, a spice, an acid, or an alcohol.

16. A method according to claim 15 wherein the composition comprises the extruded malted cereal in admixture with an edible acid, which is preferably selected from lactic acid, acetic acid, citric acid, malic acid, fumaric acid, tartaric acid, propionic acid, phosphoric acid, and hydrochloric acid, the weight ratio between the acid and the extruded malted cereal preferably being in the range of 0.1 :100-5 :100, in particular in the range of 1 :100-4 :100, such as 2 :100-4 :100.

17. A method according to claim 15 or 16 wherein the composition contains a spice such as caraway, aniseed, or fennel, or a herb, or an extract of a spice or a herb, the amount of the spice preferably being at the most 20% by weight, preferably at the most 10% by weight, calculated on the composition.

18. A method according to any of claims 15-17 wherein the composition contains ethanol, preferably in an amount of at the most 8% by weight in particular at the most 5% by weight, calculated on the composition.

19. A method according to any of claims 15-18 wherein the composition contains a sugar such as glucose, fructose, or saccharose, preferably in an amount of at the most 20% by weight, preferably at the most 10% by weight.

20. A method according to any of claims 15-19 wherein the composition contains wheat flour in an amount of at the most 30% by weight, such as at the most 20% by weight, e.g. at the most 10% by weight.

21. A method according to claim 15 wherein the composition comprises extruded malted cereal in admixture with caraway and an edible acid which is preferably lactic acid or acetic acid, in particular extruded malted barley combined with about 2-8% by weight of caraway and about 1.5-4% by weight of lactic acid or acetic acid, preferably about 3-6% by weight of caraway and about 2-3% by weight of lactic acid.

22. A method according to any of claims 12-21 wherein the composition is included in an amount of 2-3% by weight, calculated on the total dry bread mix constituents.

23. A taste-adjusting composition for rye bread or rye bread-based products or bread types based on rye meal combined with other cereal meals or flours or bread types based on other meals or flours than rye meal, such as wheat flour, comprising extruded malted cereal having a roasted character and being obtainable by the process defined in claim 1.

24. A composition according to claim 23 wherein the malted cereal is selected from malted barley, malted wheat, and malted rye, and preferably is malted barley.

25. A composition according to claim 23 or 24 which comprises other constituents combined with the extruded malted cereal, such as a cereal flour or meal, a saccharide, a spice, an acid, or an alcohol.

26. A composition according to claim 25 which comprises the extruded malted cereal in admixture with an edible acid which is preferably selected from lactic acid, acetic acid, citric acid, malic acid, fumaric acid, tartaric acid, propionic acid, phosphoric acid, and hydrochloric acid, the weight ratio between the acid and the extruded malted cereal preferably being in the range of 0.1 :100-5 :100, in particular in the range of 1 :100-4 :100, such as 2 :100-4 :100.

27. A composition according to claim 25 or 26 which contains a spice such as caraway, aniseed, or fennel, or a herb, or an extract of a spice or a herb, the amount of the spice preferably being at the most 20% by weight, preferably at the most 10% by weight, calculated on the composition.

28. A composition according to any of claims 25-27 which contains ethanol, preferably in an amount of at the most 8% by weight, in particular at the most 5% by weight, calculated on the composition.

29. A composition according to any of claims 25-28 which contains a sugar such as glucose, fructose, or saccharose, preferably in an amount of at the most 20% by weight, preferably at the most 10% by weight.

30. A composition according to any of claims 25-29 which contains wheat flour in an amount of at the most 30% by weight, such as at the most 20% by weight, e.g. at the most 10% by weight.

31. A composition according to claim 25 which comprises extruded malted cereal in admixture with caraway and an edible acid which is preferably lactic acid or acetic acid, in particular extruded malted barley combined with about 2-8% by weight of caraway and about 1.5-4% by weight of lactic acid or acetic acid, preferably about 3-6% by weight of caraway and about 2-3% by weight of lactic acid.

## Patentansprüche

1. Verfahren zur Herstellung einer geschmacksregulierenden bzw. -einstellenden Zusammensetzung für Roggenbrot oder Produkte auf der Basis von Roggenbrot oder Brotarten auf der Basis von Roggengrobmehl, kombiniert mit anderen Getreidegrobmehlen oder -feinmehlen oder Brotarten auf der Basis von anderen Grobmehlen oder Feinmehlen als Roggengrobmehl, wie Weizenfeinmehl, das das Aussetzen eines Produktes, das ein Getreidemalz mit einem Wassergehalt von höchstens 12 Gew.-% umfaßt, einer Extrusion bei einer Temperatur von 180° bis 240°C und gegebenenfalls das Vermahlen des extrudierten Produkts umfaßt.

2. Verfahren nach Anspruch 1, worin die Extrusionstemperatur 180° bis 230°C, vorzugsweise 190° bis 220°C, beträgt.

3. Verfahren nach Anspruch 1 oder 2, worin der Wassergehalt des Getreidemalzes höchstens 8 Gew.-%, vorzugsweise höchstens 6 Gew.-%, beträgt.

4. Verfahren nach einem der Ansprüche 1 bis 3, worin das Getreidemalz aus Gerstenmalz, Weizenmalz und Roggenmalz gewählt wird und vorzugsweise Gerstenmalz ist.

5. Verfahren nach einem der Ansprüche 1 bis 4, worin das Produkt, das der Extrusion ausgesetzt wird, andere Bestandteile, kombiniert mit dem Getreidemalz, wie ein Getreidegrobmehl oder -feinmehl, ein Saccharid, ein Gewürz, eine Säure oder ein Alkohol, umfaßt.

6. Verfahren nach Anspruch 5, worin das Produkt, das der Extrusion ausgesetzt wird, das Getreidemalz in Mischung mit einer Speisesäure, die vorzugsweise aus Milchsäure, Essigsäure, Zitronensäure, Apfelsäure, Fumarsäure, Weinsäure, Propionsäure, Phosphorsäure und Salzsäure gewählt wird, umfaßt, wobei das Gewichtsverhältnis zwischen der Säure und dem Getreidemalz vorzugsweise im Bereich von 0,1 :100 - 5 :100, insbesondere im Bereich von 1 :100 - 4 :100, wie 2 : 100 - 4 : 100, liegt.

7. Verfahren nach Anspruch 5 oder 6, worin das Produkt, das der Extrusion ausgesetzt wird, ein Gewürz, wie Kümmel, Anissamen oder Fenchel, oder ein Kraut oder einen Extrakt eines Gewürzes oder eines Krautes enthält, wobei die Menge des Gewürzes vorzugsweise höchstens 20 Gew.-%, vorzugsweise höchstens 10 Gew.-%, bezogen auf das Produkt, das der Extrusion ausgesetzt wird, beträgt.

8. Verfahren nach einem der Ansprüche 5 bis 7, worin das Produkt, das der Extrusion ausgesetzt wird, Ethanol, vorzugsweise in einer Menge von höchstens 8 Gew.-%, insbesondere höchstens 5 Gew.-%, bezogen auf das Produkt, das der Extrusion ausgesetzt wird, enthält.

9. Verfahren nach einem der Ansprüche 5 bis 8, worin das Produkt, das der Extrusion ausgesetzt wird, einen Zucker, wie Glucose, Fructose oder Saccharose, vorzugsweise in einer Menge von höchstens 20 Gew.-%, vorzugsweise höchstens 10 Gew.-%, bezogen auf das Produkt, das der Extrusion ausgesetzt wird, enthält.

10. Verfahren nach einem der Ansprüche 5 bis 9, worin das Produkt, das der Extrusion ausgesetzt wird, Weizenfeinmehl in einer Menge von höchstens 30 Gew.-%, wie höchstens 20 Gew.-%, beispielsweise höchstens 10 Gew.-%, bezogen auf das Produkt, das der Extrusion ausgesetzt wird, enthält.

11. Verfahren nach Anspruch 5, worin das Produkt, das der Extrusion ausgesetzt wird, Getreidemalz in Mischung mit Kümmel und einer Speisesäure, die vorzugsweise Milchsäure oder Essigsäure ist, insbesondere Gerstenmalz, kombiniert mit etwa 2 bis 8 Gew.-% Kümmel und etwa 1,5 bis 4 Gew.-% Milchsäure oder Essigsäure, vorzugsweise etwa 3 bis 6 Gew.-% Kümmel und etwa 2 bis 3 Gew.-% Milchsäure, bezogen auf das Produkt, das der Extrusion ausgesetzt wird, umfaßt.

12. Verfahren zur Herstellung von Roggenbrot oder Produkten auf der Basis von Roggenbrot oder Brotarten auf der Basis von Roggengrobmehl, kombiniert mit anderen Getreidegrobmehlen oder -feinmehlen oder Brotarten auf der Basis von anderen Grobmehlen oder Feinmehlen als Roggengrobmehl, wie Weizenfeinmehl, das das Einschließen von 0,5 bis 6 Gew.-%,insbesondere 1 bis 4 Gew.-% einer feinzerteilten Zusammensetzung, die durch das Verfahren nach Anspruch 1 erhältlich ist, in die Mischung, aus der der Brotteig gemacht wird, umfaßt.

13. Verfahren nach Anspruch 12, worin das extrudierte Getreidemalz einen gerösteten Charakter besitzt.

14. Verfahren nach Anspruch 12 oder 13, worin das Getreidemalz aus Gerstenmalz, Weizenmalz und Roggenmalz gewählt wird und vorzugsweise Gerstenmalz ist.

15. Verfahren nach einem der Ansprüche 12 bis 14, worin die Zusammensetzung andere Bestandteile, kombiniert mit dem extrudierten Getreidemalz, wie ein Getreidefeinmehl oder -grobmehl, ein Saccharid, ein Gewürz, eine Säure oder ein Alkohol, umfaßt.

16. Verfahren nach Anspruch 15, worin die Zusammensetzung das extrudierte Getreidemalz in Mischung mit einer Speisesäure, die vorzugsweise aus Milchäure, Essigsäure, Zitronensäure, Apfelsäure, Fumarsäure, Weinsäure, Propionsäure, Phosphorsäure und Salzsäure gewählt wird, umfaßt, wobei das Gewichtsverhältnis zwischen der Säure und dem extrudierten Getreidemalz vorzugweise im Bereich von 0,1 :100 - 5 :100, insbesondere im Bereich von 1 :100 - 4 :100, wie 2 :100 - 4 :100, liegt.

17. Verfahren nach Anspruch 15 oder 16, worin die Zusammensetzung ein Gewürz, wie Kümmel, Anissamen oder Fenchel, oder ein Kraut oder einen Extrakt eines Gewürzes oder eines Krautes enthält, wobei die Menge des Gewürzes vorzugsweise höchstens 20 Gew.-%, vorzugsweise höchstens 10 Gew.-%, bezogen auf die Zusammensetzung, beträgt.

18. Verfahren nach einem der Ansprüche 15 bis 17, worin die Zusammensetzung Ethanol, vorzugsweise in einer Menge von höchstens 8 Gew.-%, insbesondere höchstens 5 Gew.-%, bezogen auf die Zusammensetzung, enthält.

19. Verfahren nach einem der Ansprüche 15 bis 18, worin die Zusammensetzun, einen Zucker, wie Glucose, Fructose oder Saccharose, vorzugsweise in einer Menge von höchstens 20 Gew.-%, vorzugweise höchstens 10 Gew.-%, enthält.

20. Verfahren nach einem der Ansprüche 15 bis 19, worin die Zusammensetzung Weizenfeinmehl in einer Menge von höchstens 30 Gew.-%, wie höchstens 20 Gew.-%, beispielsweise höchstens 10 Gew.-%, enthält.

21. Verfahren nach Anspruch 15, worin die Zusammensetzung extrudiertes Getreidemalz in Mischung mit Kümmel und einer Speisesäure, die vorzugsweise Milchsäure oder Essigsäure ist, insbesondere extrudiertes Gerstenmalz, kombiniert mit etwa 2 bis 8 Gew.-% Kümmel und etwa 1,5 bis 4 Gew.-% Milchsäure oder Essig-

EP 0 235 601 B1

säure, vorzugsweise etwa 3 bis 6 Gew.-% Kümmel und etwa 2 bis 3 Gew.-% Milchsäure, umfaßt.

22. Verfahren nach einem der Ansprüche 12 bis 21, worin die Zusammensetzung in einer Menge von 2 bis 3 Gew.-%, bezogen auf die Gesamttrockenbrotmischbestandteile, eingeschlossen ist.

23. Geschmacksregulierende bzw. -einstellende Zusammensetzung für Roggenbrot oder Produkte auf der Basis von Roggenbrot oder Brotarten auf der Basis von Roggengrobmehl, kombiniert mit anderen Getreidegrobmehlen oder -feinmehlen oder Brotarten auf der Basis von anderen Grobmehlen oder Feinmehlen als Roggengrobmehl, wie Weizenfeinmehl, die extrudiertes Getreidemalz mit einem gerösteten Charakter umfaßt und die durch das Verfahren nach Anspruch 1 erhältlich ist.

24. Zusammensetzung nach Anspruch 23, worin das Getreidemalz aus Gerstenmalz, Weizenmalz und Roggenmalz gewählt wird und vorzugsweise Gerstenmalz ist.

25. Zusammensetzung nach Anspruch 23 oder 24, die andere Bestandteile, kombiniert mit dem extrudierten Getreidemalz, wie ein Getreidefeinmehl oder -grobmehl, ein Saccharid, ein Gewürz, eine Säure oder ein Alkohol, umfaßt.

26. Zusammensetzung nach Anspruch 25, die das extrudierte Getreidemalz in Mischung mit einer Speisesäure, die vorzugsweise aus Milchsäure, Essigsäure, Zitronensäure, Apfelsäure, Fumarsäure, Weinsäure, Propionsäure, Phosphoräure und Salzäure gewählt wird, umfaßt, wobei das Gewichtsverhältnis zwischen der Säure und dem extrudierten Getreidemalz vorzugsweise im Bereich von 0,1 :100 - 5 :100, insbesondere im Bereich von 1 :100 - 4 : 100, wie 2 :100 - 4 :100, beträgt.

27. Zusammensetzung nach Anspruch 25 oder 26, die ein Gewürz, wie Kümmel, Anissamen oder Fenchel, oder ein Kraut oder einen Extrakt eines Gewürzes oder eines Krautes enthält, wobei die Menge des Gewürzes vorzugsweise höchstens 20 Gew.-%, vorzugsweise höchstens 10 Gew.-%, bezogen auf die Zusammensetzung, beträgt.

28. Zusammensetzung nach einem der Ansprüche 25 bis 27, die Ethanol, vorzugsweise in einer Menge von höchstens 8 Gew.-%, insbesondere höchstens 5 Gew.-%, bezogen auf die Zusammensetzung, enthält.

29. Zusammensetzung nach einem der Ansprüche 25 bis 28, die einen Zucker, wie Glucose, Fructose oder Saccharose, vorzugsweise in einer Menge von höchstens 20 Gew.-%, vorzugsweise höchstens 10 Gew,-%, enthält.

30. Zusammensetzung nach einem der Ansprüche 25 bis 29, die Weizenfeinmehl in einer Menge von höchstens 30 Gew.-%, wie höchstens 20 Gew.-%, beispielsweise höchstens 10 Gew.-%, enthält.

31. Zusammensetzung nach Anspruch 25, die extrudiertes Getreidemalz in Mischung mit Kümmel und einer Speisesäure, die vorzugsweise Milchsäure oder Essigsäure ist, insbesondere extrudiertes Gerstenmalz, kombiniert mit etwa 2 bis 8 Gew.-% Kümmel und etwa 1,5 bis 4 Gew.-% Milchsäure oder Essigsäure, vorzugsweise etwa 3 bis 6 Gew.-% Kümmel und etwa 2 bis 3 Gew.-% Milchsäure, umfaßt.


## Revendications

1. Procédé de préparation d'une composition de réglage de goût pour le pain de seigle ou des produits à base de pain de seigle ou des types de pain à base de farine de seigle en combinaison avec des farines d'autres céréales ou des types de pain à base d'autres farines que la farine de seigle, comme par exemple la farine de blé, qui consiste à soumettre un produit qui comprend une céréale maltée ayant une teneur en eau en dépassant pas 12% en poids, à une extrusion à une température de 180 à 240°C et, facultativement, à désintégrer le produit extrudé.

2. Procédé selon la revendication 1, dans lequel la température d'extrusion est de 180 à 230°C, de préférence de 190 à 220°C.

3. Procédé selon la revendication 1 ou 2, dans lequel la teneur en eau de la céréale maltée ne dépasse pas 8% en poids, de préférence ne dépasse pas 6% en poids.

4. Procédé selon l'une quelconque des revendications 1 à 3, dans lequel la céréale maltée est choisie parmi l'orge maltée, le blé malté et le seigle malté, et est de préférence l'orge maltée.

5. Procédé selon l'une quelconque des revendications 1 à 4, dans lequel le produit soumis à l'extrusion comprend d'autres constituants combinés avec la céréale maltée, tels qu'une farine de céréale, un saccharide, une épice, un acide ou un alcool.

6. Procédé selon la revendication 5, dans lequel le produit soumis à l'extrusion comprend la céréale maltée en mélange avec un acide comestible qui est choisi de préférence parmi l'acide lactique, l'acide acétique, l'acide citrique, l'acide malique, l'acide fumarique, l'acide tartrique, l'acide propionique, l'acide phosphorique et l' acide chlorhydrique, le rapport pondéral de l'acide à la céréale maltée étant compris de préférence entre 0,1 :100 et 5 :100, en particulier entre 1 :100 et 4 :100, comme par exemple 2 :100 à 4 :100.

7. Procédé selon la revendication 5 ou 6, dans lequel le produit soumis à l'extrusion contient une épice

14

telle que le cumin, l'anis ou le fenouil, ou une herbe ou un extrait d'une épice ou d'une herbe, la proportion de l'épice ne dépassant pas de préférence 20% en poids, mieux encore ne dépassant pas 10% en poids par rapport au produit soumis à l'extrusion.

8. Procédé selon l'une quelconque des revendications 5 à 7, dans lequel le produit soumis à l'extrusion contient de l'éthanol, de préférence en une quantité ne dépassant pas 8% en poids, en particulier ne dépassant pas 5% en poids, par rapport au produit soumis à l'extrusion.

9. Procédé selon l'une quelconque des revendications 5 à 8, dans lequel le produit soumis à l'extrusion contient un sucre tel que le glucose, le fructose ou le saccharose, de préférence en une quantité ne dépassant pas 20% en poids, mieux encore ne dépassant pas 10% en poids par rapport au produit soumis à l'extrusion.

10. Procédé selon l'une quelconque des revendications 5 à 9, dans lequel le produit soumis à l'extrusion contient de la farine de blé en une quantité ne dépassant pas 30% en poids, notamment ne dépassant pas 20% en poids, par exemple ne dépassant pas 10% en poids, par rapport au produit soumis à l'extrusion.

11. Procédé selon la revendication 5, dans lequel le produit soumis à l'extrusion comprend une céréale maltée en mélange avec le cumin et un acide comestible qui est de préférence l'acide lactique ou l'acide acétique, en particulier l'orge maltée combinée avec environ 2 à 8% en poids de cumin et environ 1,5 à 4% en poids d'acide lactique ou d'acide acétique, de préférence environ 3 à 6% en poids de cumin et environ 2 à 3% en poids d'acide lactique par rapport au produit soumis à l'extrusion.

12. Procédé de fabrication de pain de seigle ou de produits à base de pain de seigle ou des types de pain à base de farine de seigle en combinaison avec des farines d'autres céréales ou des types de pain à base d'autres farines que la farine de seigle telles que la farine de blé, qui consiste à incorporer dansle mélange à partir duquel on prépare la pâte de pain de 0,5 à 6% en poids, en particulier de 1 à 4% en poids d'une composition finement divisée qu'on obtient par le procédé selon la rev. 1.

13. Procédé selon la revendication 12, dans lequel la céréale maltée extrudée a un caractère grillé.

14. Procédé selon la revendication 12 ou 13, dans lequel la céréale maltée est choisie parmi l'orge maltée, le blé malté et le seigle malté et est de préférence l' orge maltée.

15. Procédé selon l'une quelconque des revendications 12 à 14, dans lequel la composition comprend d'autres constituants combinés avec la céréale maltée extrudée, tels qu'une farine de céréales, un saccharide, une épice, un acide ou un alcool.

16. Procédé selon la revendication 15, dans lequel la composition comprend la céréale maltée extrudée en mélange avec un acide comestible qui est de préférence choisi parmi l'acide lactique, l'acide acétique, l'acide citrique, l'acide malique, l'acide fumarique, l'acide tartrique, l'acide propionique, l'acide phosphorique et l' acide chlorhydrique, le rapport pondéral de l'acide à la céréale maltée extrudée étant de préférence compris entre 0,1 :100 et 5 :100, de préférence entre 1 :100 et 4 :100, comme par exemple 2 :100 à 4 :100.

17. Procédé selon la revendication 15 ou 16, dans lequel la composition contient une épice telle que le cumin, l'anis ou le fenouil ou une herbe ou un extrait d' une épice ou d'une herbe, la quantité de l'épice ne dépassant pas avantageusement 20% en poids, de préférence ne dépassant pas 10% en poids par rapport à la composition.

18. Procédé selon l'une quelconque des revendications 15 à 17, dans lequel la composition contient de l' éthanol, de préférence à raison d'un maximum de 8% en poids et en particulier d'un maximum de 5% en poids par rapport à la composition.

19. Procédé selon l'une quelconque des revendications 15 à 18, dans lequel la composition contient un sucre tel que le glucose, le fructose ou le saccharose, de préférence en une quantité ne dépassant pas 20% en poids et, de préférence, ne dépassant pas 10% en poids.

20. Procédé selon l'une quelconque des revendications 15 à 19, dans lequel la composition contient de la farine de blé en une quantité ne dépassant pas 30% en poids, par exemple ne dépassant pas 20% en poids, par exemple d'un maximum de 10% en poids.

21. Procédé selon la revendication 15, dans lequel la composition comprend une céréale maltée extrudée en mélange avec le cumin et un acide comestible qui est de préférence l'acide lactique ou l'acide acétique, en particulier l'orge maltée extrudée en combinaison avec environ 2 à 8% en poids de cumin et environ 1,5 à 4% en poids d' acide lactique ou d'acide acétique, de préférence environ 3 à 6% en poids de cumin et environ 2 à 3% en poids d'acide lactique.

22. Procédé selon l'une quelconque des revendications 12 à 21, dans lequel la composition est incorporée à raison de 2 à 3% en poids par rapport au total des constituants secs du mélange pour pain.

23. Composition de réglage du goût du pain de seigle ou de produits à base de pain de seigle ou des types de pains à base de farine de seigle en combinaison avec des farines d'autres céréales ou des types de pain à base d'autres farines que la farine de seigle telles que la farine de blé, qui comprend une céréale maltée extrudée ayant un caractére grillé et qu'on peut obtenir selon le procédé de la revendication 1.

24. Composition selon la revendication 23, dans laquelle la céréale maltée est choisie parmi l'orge maltée, le blé malté et le seigle malté et est de préférence l'orge maltée.

25. Composition selon la revendication 23 ou 24, qui comprend d'autres constituants combinés avec la céréale maltée extrudée tels qu'une farine de céréale, un saccharide, une épice, un acide ou un alcool.

26. Composition selon la revendication 25, qui comprend la céréale maltée extrudée en mélange avec un acide comestible choisi de préférence parmi l'acide lactique, l'acide acétique, l'acide citrique, l'acide malique, l'acide fumarique, l'acide tartrique, l'acide propionique, l'acide phosphorique et l'acide chlorhydrique, le rapport pondéral de l'acide à la céréale maltée extrudée étant de préférence compris entre 0,1 :100 et 5 :100, en particulier entre 1 :100 et 4 :100, comme par exemple 2 :100 à 4 :100.

27. Composition selon la revendication 25 ou 26, qui contient une épice telle que le cumin, l'anis ou le fenouil, ou une herbe ou un extrait d'une épice ou d'une herbe, la quantité de l'épice ne dépassant pas de préférence 20% en poids, surtout ne dépassant pas 10% en poids par rapport à la composition.

28. Composition selon l'une quelconque des revendications 25 à 27, qui contient de l'éthanol, de préférence en une quantité ne dépassant pas 8% en poids, en particulier ne dépassant pas 5% en poids par rapport à la composition.

29. Composition selon l'une quelconque des revendications 25 à 28, qui contient un sucre tel que le glucose, le fructose ou le saccharose, de préférence en une quantité ne dépassant pas 20% en poids et de préférence ne dépassant pas 10% en poids.

30. Composition selon l'une quelconque des revendications 25 à 29, qui contient de la farine de blé en une quantité ne dépassant pas 30% en poids, surtout ne dépassant pas 20% en poids, par exemple d'un maximum de 10% en poids.

31. Composition selon la revendication 25, qui comprend une céréale maltée extrudée en mélange avec le cumin et un acide comestible qui est de préférence l'acide lactique ou l'acide acétique, en particulier l'orge maltée extrudée en combinaison avec environ 2 à 8% de cumin et environ 1,5 à 4% en poids d'acide lactique ou d'acide acétique, de préférence environ 3 à 6% en poids de cumin et environ 2 à 3% en poids d'acide lactique.